# EUROPEAN PATENT SPECIFICATION

(11) **EP 3 671 000 B1**
(45) Date of publication and mention of the grant of the patent: **27.09.2023**
(21) Application number: 18398012.7
(22) Date of filing: 19.12.2018
(51) Int. Cl.: F16M 11/08, F16M 11/24, G03B 15/00

(54) **A COMPACT STAND FOR A TELEVISION CAMERA**
EIN KOMPAKTER HALTER FÜR EIN FERNSEHKAMERA
SUPPORT COMPACT POUR CAMERA DE TELEVISION

(43) Date of publication of application: 24.06.2020
(73) Proprietor: OmniCam4Sky, Lda., 2665-618 Venda Do Pinheiro (PT)
(72) Inventor: Gaspar, Jorge Manuel Quinta, 2665-618 Venda DO Pinheiro (PT); Guerreiro, Paulo José Nunes, 2665-618 Venda DO Pinheiro (PT)
(74) Representative: do Nascimento Gomes, Rui

(56) References cited:
- WO-A1-03/041400
- ES-A1- 2 197 774
- US-A- 6 007 032

## Description

### FIELD OF THE INVENTION

The present invention is enclosed in the area of accessories for television cameras, typically referred as professional television cameras, and used for the transmission of events with particular movement, such as sports or music events - usually live -, particularly referring to the stand in which such professional television cameras are placed.

### PRIOR ART

In solutions known in the art, the stands for a professional television camera typically contain a central plate, in which a column is fixed, a television camera being connectable to the column. Furthermore, an arm with a seat is rotatable around the column. Thus, prior art solutions provide for the rotation of the television camera operator, seated on the seat, around the column, as well as the rotation of the camera around the same axis.

With regard to the support of the stand on the surface, it may be provided by a fixed plate or fixed set of legs, such as the case of patent application WO0079178, or provided by a set of movable legs, which are connected to the central plate and rotatable with regard to it, providing a fold-up arrangement in which the stand can be stored and trasported, such as known from WO 03/041400 A1.

However, when considering the supporting legs, the existing solutions consist of a simplified aggregation of pivotable elements, which do not provide a compact and easily storable and transportable stand.

The present solution innovatively overcomes such issues.

### SUMMARY OF THE INVENTION

It is an object of the present invention a compact stand for a television camera such as a professional television camera, which comprises:
- a fixed base with a plurality of slots peripherally provided,
- a column suitable for connecting a television camera, such that the camera is therein rotatable around an axis of the column,
- an arm suitable for fixing a seat for a television camera operator and rotatable around the axis of the column, and
- a plurality of supporting legs, each being pivotable upon the fixed base, wherein each supporting leg is pivotable between:
   i. a folded position, in which it is positioned so that it is able to be coupled to a corresponding slot, and
   ii. an open position, in which it is positioned substantially in parallel to the fixed base and thereby able to be placed on a surface.

The compact stand therefore provides for a better coupling of the supporting legs to the fixed base - which acts as the reference element of the stand - by allowing that the supporting legs are brought into an open position when the stand is in operation, i.e., placed on a surface, with a television camera connected to the column and television camera operator seated in a set connected to the arm. When the stand is not in operation, for instance for its storage or transport, it may be brought into a folded position, in which each supporting leg is coupled to a corresponding slot, therefore reducing the form factor of the stand while folded and having higher easiness in transportation.

Regarding each supporting leg, the referred pivoting movement includes a pivoting axis of each supporting leg, the axis being such that the supporting leg is aligned with the corresponding slot, therein being coupled.

Typically, the fixed base is flat, comprising a plate which, most often, is rounded. With regard to the several elements which the stand of the present invention comprises, they may be connected by varied forms known in the art, such as bolts, nuts and/or pivots, or others. Advantageously, the supporting legs are independently movable between each other, that meaning that a supporting leg can be pivoted from an open position to a folded position independently of the position of any of the other supporting legs.

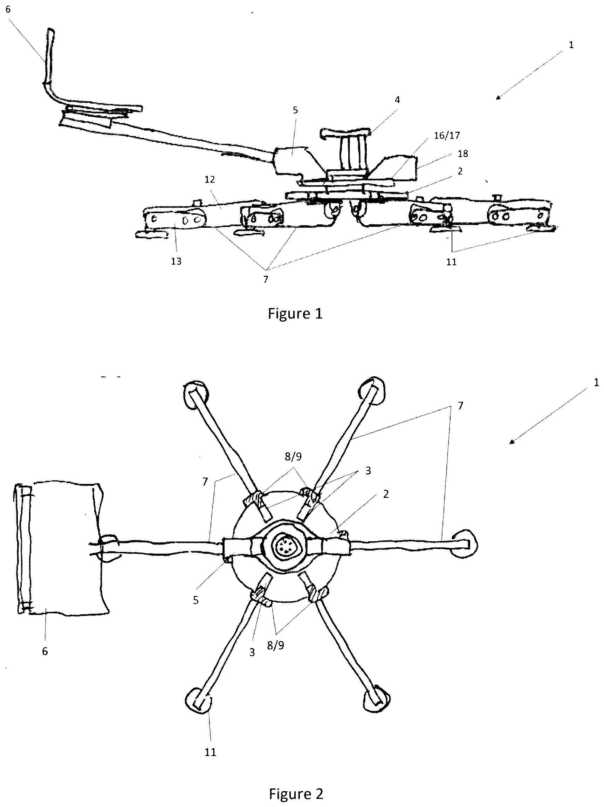

As shown in Figures 1 and 2, the axis of the column is longitudinal, therein being substantially perpendicular to the fixed plate and, thus, to the ground.

In an inventive aspect of the stand of the present invention, it further comprises blocking means suitable for blocking each of the supporting legs in the folded and/or in the open position, the blocking means being connected to the fixed base and pivotable between:
- a blocking position, in which the blocking means prevent the pivotable movement of the supporting legs,
- a released position, in which the supporting legs are able to perform the referred pivotable movement.

The blocking means allow higher stability of the stand when brought into one of the two positions, as the blocking position of the blocking means prevent the pivotable movement of the supporting legs. A released position of the blocking means allows to again release the supporting legs.

Advantageously, the blocking means comprise a set of blocking elements, each blocking element corresponding to a slot and a supporting leg, each blocking element being such that it pivots around an axis perpendicular to the pivoting axis of the corresponding supporting leg and provides the blocking of the corresponding supporting leg in the corresponding folded position or open position and, preferably, the blocking elements are connected to each other so that they are jointly movable. The blocking elements provide for blocking of each supporting leg. The blocking is provided independently by each of such elements.

In another inventive aspect of the stand, each supporting leg comprises a proximal section and a distal section, the two sections being pivotably connected such that, upon placement of the supporting legs on a surface in the open position, the angle between each distal section and corresponding proximal section is adaptable, providing regulation of the distance between the proximal section and the surface. Preferably, in such situation, each of the blocking elements is in a blocked position.

The stand of the present invention may form a transport kit, together with a suitable case, the stand being brought into folded position and put into the case. A case may have dimensions which allow to store more than one stand. A case has wheels and a handle, thereby improving transportability of the transport kit. Such advantages are also obtained by the high compactness of the stand of the present invention.

### DESCRIPTION OF FIGURES

Figure 1 - side view of a representation of an embodiment of the stand (1) of the present invention in an open position.
Figure 2 - top view of a representation of an embodiment of the stand (1) of the present invention in an open position.
Figure 3 - top view of a representation of an embodiment of the stand (1) of the present invention in an unfolded position.
Figure 4 - perspective view of a representation of an embodiment of the stand (1) of the present invention in an unfolded position.
Figure 5a - side view of a representation of an embodiment of a supporting leg (7) of the stand of the present invention, with the proximal section (12) and the distal section (13), the distal section (13) having a first end (14) pivoted in an end the proximal section (12), and a second end (15) pivoted in an intermediate point of the proximal section (12), and a foot (11) being pivotably connected to said first end (14) of the distal section (13). In such case, the ground is relatively even, with no particular need for height regulation and adaptation of the supporting legs (7).
Figure 5b - side view of the representation of Figure 5a, in such case the ground being uneven, and thereby the distal section (13) pivoting in the proximal section (12) such that the first end (14) of the distal section (13) is further away from the proximal section (12) than in the situation of Figure 5a. Moreover, the corresponding foot (11) also pivots in the first end (14) such that it lays on the ground. The supporting leg (7) thereby provides height regulation and adaptation with regard to the remaining supporting legs (7).

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the stand of the present invention, each supporting leg (7) comprises a cut-out, such cut-out being so arranged that, when such supporting leg (7) is in a folded position, provides for the coupling of the corresponding blocking element, when such blocking element is in a blocking position. In an example of such cut, the blocking elements (9) are in blocking position and coupled to such cut-out of the supporting legs (7). The supporting legs (7) are therefore steadily blocked in the folding position.

Moreover, in a further embodiment, each supporting leg (7) is so arranged in relation to the fixed base (2) that, when in an open position, the corresponding blocking element, when pivoted into a blocking position, is between such supporting leg (7) and the corresponding slot (3). The supporting legs (7) are therefore steadily blocked in the open position.

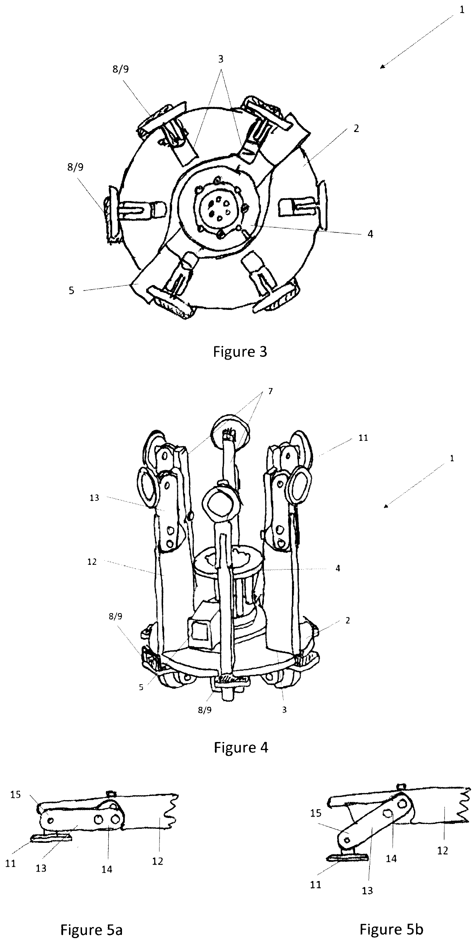

Preferably, the stand further comprises a plurality of feet (11), each foot (11) being provided at an end of a corresponding supporting leg (7) and, preferably, being flat and arranged substantially in parallel with the fixed base (2), when the corresponding leg is in an open position. The feet (11) provide for a more stable positioning on a surface, as the contact area with such surface is increased. The feet (11) are jointly moved with the legs, as shown in Figures 1-4.

Specifically, and for each supporting leg:
- a first end (14) of the distal section (13) is pivoted in an end the proximal section (12), and
- a second end (15) of the distal section (13) is pivoted in an intermediate point of the proximal section (12), and
a foot (11) is pivotably connected to said first end (14) of the distal section (13). Thereby providing for height regulation and adaptation of the supporting legs (7), which is especially useful in irregular surfaces, typical of the outdoors.

Optionally, each supporting leg (7) is pivotable upon the fixed base (2) in a second end (15), such second end (15) having an extension with regard to the pivot that, when the supporting leg (7)is in a folded position and the corresponding blocking element in a blocking position, the second end (15) provides for support on a surface, the plurality of supporting legs (7) thereby supporting the stand on a surface, each second end (15) preferably being rounded. It provides for a better positioning of the folded stand - the legs are in a folded position - when put on a surface / the floor. The rounded second ends (15) provide steadier positioning.

The stand of the present invention may have a fixed seat (6) or a seat (6) able to be coupled to the arm (5). The seat (6) is not required for storage / transportation. Specifically, in such embodiment the stand comprises a seat (6) for a television camera operator able to be coupled to the arm (5) or definitively connected to the arm (5). The seat (6) may include a portion for a television camera operator to sit, a backrest and a bar connectable to the arm (5), as provided by the embodiments of Figures 1 and 2.

In another specific embodiment of the stand, combinable with any above described, it comprises an intermediate element (16) rotatable around the column (4), the arm (5) being fixed to such intermediate element (16), the intermediate element (16) preferably further comprising a counter-balance, such that the counter-balance promotes a balance with the weight of a television camera operator seated on a seat (6) connected to the arm (5), the intermediate element (16) preferably comprising a disk (17) which is rotatably connected to the column (4).

In another advantageous embodiment, the stand further comprises second means suitable for fixing a second seat (6) for a television camera operator, such second means suitable for fixing a second seat (6) being closer to the fixed base (2) than the arm (5). Such second means therefore provide for a second height for a seat (6) to be provided, lower than the height of the arm (5). A television camera operator may thus use the stand while seated closer to the ground. Preferably, the second means are arranged oppositely to the arm (5), with respect to the column (4).

In another inventive aspect of the stand of the present invention, it further comprises means for a television camera operator to stand, able to be coupled to a first side of the supporting legs (7) when such supporting legs (7) are in an open position, optionally the means for a television camera operator to stand consisting of a plurality of plates able to be coupled to said first side of each supporting leg, the plates preferably being formed by a grid. Such means for a television camera operator to stand, which may consist of a set of plates formed by a grid, provide for a better way for the operator to move around the column (4), considering that, otherwise, there would be a need to avoid the supporting legs (7), which are in the open position.

Optionally, each supporting leg (7) comprises a second cut-out, the second cut-out being provided in a distal half of the supporting leg (7) and being suitable for a fastening element such as a rope to be coupled, and thereby enable all the supporting legs (7) to be tightly bound together.

The elements of the stand, namely the arm (5), column (4), fixed base (2) and supporting legs (7) are preferably made of a metal, more preferably aluminium. It provides for lightness and resistance of a stand (1) which is frequently transported, thus folded and unfolded, and used in outdoors, subject to, for example, rain, wind, sunlight.

Optionally, the supporting legs (7) and, consequently, the corresponding slots (3) are between 5 and 8, preferably 6. Other amounts, if able to be provided in the fixed base (2), are also suitable.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A compact stand for a television camera (1) **characterised in that** it comprises:
- a fixed base (2) with a plurality of slots (3) peripherally provided,
- a column (4) suitable for connecting a television camera, such that the camera is rotatable around an axis of the column (4),
- an arm (5) suitable for fixing a seat (6) for a television camera operator and rotatable around the axis of the column (4), and
- a plurality of supporting legs (7), each being pivotable upon the fixed base (2), wherein each supporting leg (7) is pivotable between:
i.a folded position, in which it is positioned in the corresponding slot (3) so that it is able to be coupled to said corresponding slot (3), and
ii.an open position, in which it is positioned substantially in parallel to the fixed base (2) and thereby able to be placed on a surface.

2. A stand (1) according to the previous claim wherein it further comprises blocking means (8) suitable for blocking each of the supporting legs (7) in the folded and/or in the open position, the blocking means (8) being connected to the fixed base (2) and pivotable between:
- a blocking position, in which the blocking means (8) prevent the pivotable movement of the supporting legs (7),
- a released position, in which the supporting legs (7) are able to perform the referred pivotable movement.

3. A stand (1) according to the previous claim wherein the blocking means (8) comprise a set of blocking elements (9), each blocking element corresponding to a slot and a supporting leg, each blocking element being such that it pivots around an axis perpendicular to the pivoting axis of the corresponding supporting leg (7) and provides the blocking of the corresponding supporting leg (7) in the corresponding folded position or open position and, preferably, the blocking elements (9) are connected to each other so that they are jointly movable.

4. A stand (1) according to the previous claim wherein each supporting leg (7) comprises a cut-out, such cut-out being so arranged that, when such supporting leg (7) is in a folded position, provides for the coupling of the corresponding blocking element, when such blocking element is in a blocking position.

5. A stand (1) according to any of the claims 3-4 wherein each supporting leg (7) is so arranged in relation to the fixed base (2) that, when in an open position, the corresponding blocking element, when pivoted into a blocking position, is between such supporting leg (7) and the corresponding slot (3).

6. A stand (1) according to any of the preceding claims wherein it further comprises a plurality of feet (11), each foot (11) being provided at an end of a corresponding supporting leg (7) and, preferably, being flat and arranged substantially in parallel with the fixed base (2), when the corresponding leg is in an open position.

7. A stand (1) according to any of the preceding claims wherein each supporting leg (7) comprises a proximal section (12) and a distal section (13), the two sections being pivotably connected such that, upon placement of the supporting legs (7) on a surface in the open position, the angle between each distal section (13) and corresponding proximal section (12) is adaptable, providing regulation of the distance between the proximal section (12) and the surface.

8. A stand (1) according to claims 6 and 7, wherein, for each supporting leg:
- a first end (14) of the distal section (13) is pivoted in an end the proximal section (12), and
- a second end (15) of the distal section (13) is pivoted in an intermediate point of the proximal section (12), and
a foot (11) is pivotably connected to said first end (14) of the distal section (13).

9. A stand (1) according to any of the preceding claims, wherein each supporting leg (7) is pivotable upon the fixed base (2) in a second end (15), such second end (15) having an extension with regard to the pivot that, when the supporting leg (7) is in a folded position and the corresponding blocking element in a blocking position, the second end (15) provides for support on a surface, the plurality of supporting legs (7) thereby supporting the stand on a surface, each second end (15) preferably being rounded.

10. A stand (1) according to any of the preceding claims wherein it comprises a seat (6) for a television camera operator able to be coupled to the arm (5) or definitively connected to the arm (5).

11. A stand (1) according to any of the preceding claims wherein it comprises an intermediate element (16) rotatable around the column (4), the arm (5) being fixed to such intermediate element (16), the intermediate element (16) further comprising a counter-balance, such that the counter-balance promotes a balance with the weight of a television camera operator seated in a seat (6) connected to the arm (5), the intermediate element (16) preferably comprising a disk (17) which is rotatably connected to the column (4).

12. A stand (1) according to any of the preceding claims wherein it further comprises second means suitable for fixing a second seat (6) for a television camera operator, such second means suitable for fixing a second seat (6) being closer to the fixed base (2) than the arm (5).

13. A stand (1) according to any of the preceding claims wherein it further comprises means for a television camera operator to stand, able to be coupled to a first side of the supporting legs (7) when such supporting legs (7) are in an open position, optionally the means for a television camera operator to stand consisting of a plurality of plates able to be coupled to said first side of each supporting leg, the plates preferably being formed by a grid.

14. A stand (1) according to any of the preceding claims wherein each supporting leg (7) comprises a second cut-out, the second cut-out being provided in a distal half of the supporting leg (7) and being suitable for a fastening element such as a rope to be coupled, and thereby enable all the supporting legs (7) to be tightly bound together.

15. A stand (1) according to the preceding claims wherein the arm (5), column (4), fixed base (2) and supporting legs (7) are made of a metal, preferably aluminium.

## Patentansprüche

1. Ein kompaktes Stativ für eine Fernsehkamera (1), **dadurch gekennzeichnet, dass** es umfasst:
- eine feste Basis (2) mit einer Vielzahl von Schlitzen (3), die am Umfang vorgesehen sind,
- eine Säule (4), die zum Anschluss einer Fernsehkamera geeignet ist, so dass die Kamera um eine Achse der Säule (4) drehbar ist,
- einem Arm (5), der zur Befestigung eines Sitzes (6) für einen Fernsehkameramann geeignet und um die Achse der Säule (4) drehbar ist, und
- eine Vielzahl von Stützbeinen (7), von denen jedes auf der festen Basis (2) schwenkbar ist, wobei jedes Stützbein (7) schwenkbar ist zwischen:
i.eine eingeklappte Stellung, in der sie in dem entsprechenden Schlitz (3) positioniert ist, so dass sie mit dem entsprechenden Schlitz (3) gekoppelt werden kann, und
ii.eine geöffnete Stellung, in der sie im Wesentlichen parallel zur festen Basis (2) positioniert ist und somit auf einer Oberfläche platziert werden kann.

2. Stativ (1) nach dem vorhergehenden Anspruch, wobei er ferner Sperrmittel (8) umfasst, die geeignet sind, jedes der Stützbeine (7) in der eingeklappten und/oder in der geöffneten Stellung zu blockieren, wobei die Sperrmittel (8) mit der festen Basis (2) verbunden sind und schwenkbar zwischen:
- eine Sperrstellung, in der die Sperrmittel (8) die Schwenkbewegung der Stützbeine (7) verhindern,
- eine Freigabestellung, in der die Stützbeine (7) die genannte Schwenkbewegung ausführen können.

3. Stativ (1) nach dem vorhergehenden Anspruch, wobei die Sperrmittel (8) einen Satz von Sperrelemente (9) umfassen, wobei jedes Sperrelement einem Schlitz und einem Stützbein entspricht, wobei jedes Sperrelement so beschaffen ist, dass es um eine Achse schwenkt, die senkrecht zur Schwenkachse des entsprechenden Stützbeins (7) steht, und die Sperrung des entsprechenden Stützbeins (7) in der entsprechenden gefalteten Stellung oder offenen Stellung gewährleistet, und wobei die Sperrelemente (9) vorzugsweise so miteinander verbunden sind, dass sie gemeinsam beweglich sind.

4. Stativ (1) nach dem vorhergehenden Anspruch, wobei jedes Stützbein (7) einen Ausschnitt aufweist, wobei dieser Ausschnitt so angeordnet ist, dass er, wenn sich der Stützbein (7) in einer eingeklappten Stellung befindet, für die Kopplung des entsprechenden Sperrelements sorgt, wenn sich das Sperrelement in einer Sperrstellung befindet.

5. Stativ (1) nach einem der Ansprüche 3-4, wobei jedes Stützbein (7) in Bezug auf die feste Basis (2) so angeordnet ist, dass sich das entsprechende Sperrelement, wenn es in einer offenen Stellung ist, zwischen diesem Stützbeine (7) und dem entsprechenden Schlitz (3) befindet wenn es in eine Sperrstellung geschwenkt wird.

6. Stativ (1) nach einem der vorhergehenden Ansprüche, wobei er ferner eine Vielzahl von Füßen (11) umfasst, wobei jeder Fuß (11) an einem Ende eines entsprechenden Stützbeins (7) vorgesehen ist und vorzugsweise flach und im Wesentlichen parallel zu der festen Basis (2) angeordnet ist, wenn sich das entsprechende Bein in einer offenen Stellung befindet.

7. Stativ (1) nach einem der vorhergehenden Ansprüche, wobei jedes Stützbein (7) einen proximalen Abschnitt (12) und einen distalen Abschnitt (13) umfasst, wobei die beiden Abschnitte schwenkbar verbunden sind, so dass beim Ablegen der Stützbeine (7) auf einer Oberfläche in der offenen Stellung der Winkel zwischen jedem distalen Abschnitt (13) und dem entsprechenden proximalen Abschnitt (12) anpassbar ist, wodurch der Abstand zwischen dem proximalen Abschnitt (12) und der Oberfläche reguliert wird.

8. Stativ (1) nach einem der Ansprüche 6 und 7, wobei für jedes Stützbein
- ein erstes Ende (14) des distalen Abschnitts (13) in einem Ende des proximalen Abschnitts (12) drehbar gelagert ist, und
- ein zweites Ende (15) des distalen Abschnitts (13) in einem Zwischenpunkt des proximalen Abschnitts (12) drehbar gelagert ist, und
ein Fuß (11) ist schwenkbar mit dem ersten Ende (14) des distalen Abschnitts (13) verbunden.

9. Stativ (1) nach einem der vorhergehenden Ansprüche, wobei jedes Stützbein (7) an einem zweiten Ende (15) an der festen Basis (2) schwenkbar ist, wobei dieses zweite Ende (15) eine Ausdehnung in Bezug auf den Drehpunkt aufweist, so dass, wenn sich das Stützbein (7) in einer eingeklappten Stellung und das entsprechende Sperrelement in einer Sperrstellung befindet, das zweite Ende (15) für eine Abstützung auf einer Oberfläche sorgt, wobei die mehreren Stützbeine (7) den Stativ auf einer Oberfläche abstützen, wobei jedes zweite Ende (15) vorzugsweise abgerundet ist.

10. Stativ (1) nach einem der vorhergehenden Ansprüche, wobei es einen Sitz (6) für einen Fernsehkameramann umfasst, der mit dem Arm (5) gekoppelt oder endgültig mit dem Arm (5) verbunden werden kann.

11. Stativ (1) nach einem der vorhergehenden Ansprüche, wobei es ein um die Säule (4) drehbares Zwischenelement (16) umfasst, wobei der Arm (5) an einem solchen Zwischenelement (16) befestigt ist, wobei das Zwischenelement (16) ferner ein Gegengewicht umfasst, so dass das Gegengewicht ein Gleichgewicht mit dem Gewicht eines Fernsehkameramanns fördert, der auf einem mit dem Arm (5) verbundenen Sitz (6) sitzt, wobei das Zwischenelement (16) vorzugsweise eine Scheibe (17) umfasst, die drehbar mit der Säule (4) verbunden ist.

12. Stativ (1) nach einem der vorhergehenden Ansprüche, wobei es ferner zweite Mittel umfasst, die zur Befestigung eines zweiten Sitzes (6) für einen Fernsehkameramann geeignet sind, wobei diese zweiten Mittel, die zur Befestigung eines zweiten Sitzes (6) geeignet sind, näher an der festen Basis (2) liegen als der Arm (5).

13. Stativ (1) nach einem der vorhergehenden Ansprüche, wobei es ferner Mittel für einen Fernsehkameramann zum Stehen umfasst, die mit einer ersten Seite der Stützbeine (7) gekoppelt werden können, wenn sich diese Stützbeine (7) in einer offenen Stellung befinden, wobei die Mittel für einen Fernsehkameramann zum Stehen optional aus einer Vielzahl von Platten bestehen, die mit der ersten Seite jedes Stützbeins gekoppelt werden können, wobei die Platten vorzugsweise durch ein Gitter gebildet werden.

14. Stativ (1) nach einem der vorhergehenden Ansprüche, wobei jedes Stützbein (7) einen zweiten Ausschnitt aufweist, wobei die zweite Ausschnitt in einer distalen Hälfte des Stützbeines (7) vorgesehen ist und geeignet ist, um ein Befestigungselement, wie z.B. ein Seil, anzukoppeln und dadurch zu ermöglichen, dass alle Stützbeine (7) fest miteinander verbunden werden.

15. Stativ (1) nach einem der vorhergehenden Ansprüche, wobei der Arm (5), die Säule (4), der feste Basis (2) und die Stützbeine (7) aus einem Metall, vorzugsweise aus Aluminium, bestehen.

## Revendications

1. Support compact pour une caméra de télévision (1) **caractérisé en ce qu'**il comprend :
- une base fixe (2) avec une pluralité de fentes (3) disposées de façon périphérique,
- une colonne (4) apte à connecter une caméra de télévision, de sorte que la caméra peut tourner autour d'un axe de la colonne (4),
- un bras (5) apte à la fixation d'un siège (6) pour un caméraman de télévision et pouvant tourner autour de l'axe de la colonne (4), et
- une pluralité de jambes de support (7), chacune pouvant pivoter sur la base fixe (2), où chaque jambe de support (7) peut pivoter entre:
i. une position pliée, où elle est positionnée dans la fente (3) correspondante de façon à pouvoir être accouplée à ladite fente (3) correspondante, et
ii. une position ouverte, où elle est positionnée substantiellement parallèlement à la base fixe (2) et peut ainsi être posée sur une surface.

2. Support (1) selon la revendication précédente, qui comprend aussi des moyens de blocage (8) aptes à bloquer chacune des jambes de support (7) en position pliée et/ou ouverte, les moyens de blocage (8) étant connectés à la base fixe (2) et pouvant pivoter entre :
- une position de blocage, dans laquelle les moyens de blocage (8) empêchent le mouvement pivotant des jambes de support (7),
- une position relâchée, dans laquelle les jambes de support (7) sont capables d'effectuer le mouvement pivotant mentionné.

3. Support (1) selon la revendication précédente, dans lequel les moyens de blocage (8) comprennent un ensemble d'éléments de blocage (9), chaque élément de blocage correspondant à une fente et à une jambe de support, chaque élément de blocage étant tel qu'il pivote autour d'un axe perpendiculaire à l'axe de pivotement de la jambe de support (7) correspondante et assure le blocage de la jambe de support (7) correspondante dans la position pliée ou ouverte correspondante et, de préférence, les éléments de blocage (9) sont connectés l'un à l'autre de sorte qu'ils sont solidairement mobiles.

4. Support (1) selon la revendication précédente, dans lequel chaque jambe de support (7) comprend une découpe, cette découpe étant disposée de façon à assurer, lorsque la jambe de support (7) est en position pliée, l'accouplement de l'élément de blocage correspondant, lorsque cet élément de blocage est en position de blocage.

5. Support (1) selon l'une quelconque des revendications 3 et 4, dans lequel chaque jambe de support (7) est disposée par rapport à la base fixe (2) de telle sorte que, en position ouverte, l'élément de blocage correspondant, lorsqu'il est pivoté en position de blocage, se trouve entre cette jambe de support (7) et la fente (3) correspondante.

6. Support (1) selon l'une quelconque des revendications précédentes, qui comprend aussi une pluralité de pieds (11), chaque pied (11) étant prévu à une extrémité d'une jambe de support (7) correspondante et, de préférence, étant plat et disposé substantiellement parallèlement à la base fixe (2), lorsque la jambe correspondante est en position ouverte.

7. Support (1) selon l'une quelconque des revendications précédentes, dans lequel chaque jambe de support (7) comprend une section proximale (12) et une section distale (13), les deux sections étant connectées de façon pivotante de sorte que, lorsque les jambes de support (7) sont placées sur une surface en position ouverte, l'angle entre chaque section distale (13) et la section proximale (12) correspondante est adaptable, ce qui permet de réguler la distance entre la section proximale (12) et la surface.

8. Support (1) selon les revendications 6 et 7, dans lequel, pour chaque jambe de support :
- une première extrémité (14) de la section distale (13) est pivotée à une extrémité de la section proximale (12), et
- une deuxième extrémité (15) de la section distale (13) est pivotée à un point intermédiaire de la section proximale (12), et
un pied (11) est connecté de façon pivotante à ladite première extrémité (14) de la section distale (13).

9. Support (1) selon l'une quelconque des revendications précédentes, dans lequel chaque jambe de support (7) peut pivoter sur la base fixe (2) à une deuxième extrémité (15), cette deuxième extrémité (15) ayant une extension par rapport au pivot qui, lorsque la jambe de support (7) est en position pliée et l'élément de blocage correspondant est en position de blocage, la deuxième extrémité (15) assure un appui sur une surface, la pluralité de jambes de support (7) supportant ainsi le support sur une surface, chaque deuxième extrémité (15) étant de préférence arrondie.

10. Support (1) selon l'une quelconque des revendications précédentes, qui comprend un siège (6) pour un caméraman de télévision, apte à être accouplé au bras (5) ou définitivement connecté au bras (5).

11. Support (1) selon l'une quelconque des revendications précédentes, qui comprend un élément intermédiaire (16) rotatif autour de la colonne (4), le bras (5) étant fixé à cet élément intermédiaire (16), l'élément intermédiaire (16) comprenant aussi un contrepoids, de sorte que le contrepoids favorise un équilibre avec le poids d'un caméraman de télévision assis sur un siège (6) connecté au bras (5), l'élément intermédiaire (16) comprenant de préférence un disque (17) qui est connecté de façon rotative à la colonne (4).

12. Support (1) selon l'une quelconque des revendications précédentes, qui comprend aussi des seconds moyens permettant de fixer un deuxième siège (6) pour un caméraman de télévision, ces seconds moyens permettant de fixer un deuxième siège (6) étant plus proche de la base fixe (2) que le bras (5).

13. Support (1) selon l'une quelconque des revendications précédentes, qui comprend aussi des moyens permettant à un caméraman de télévision de se tenir debout, aptes à être accouplés à un premier côté des jambes de support (7) lorsque ces jambes de support (7) sont en position ouverte, optionnellement les moyens permettant à un caméraman de télévision de se tenir debout consistant en une pluralité de plaques aptes à être accouplées audit premier côté de chaque jambe de support, les plaques étant de préférence formées d'une grille.

14. Support (1) selon l'une quelconque des revendications précédentes, dans lequel chaque jambe de support (7) comprend une deuxième découpe, la deuxième découpe étant prévue dans une moitié distale de la jambe de support (7) et approprié pour un élément de fixation tel qu'une corde à accoupler, et permettant ainsi à toutes les jambes de support (7) d'être étroitement liées entre elles.

15. Support (1) selon les revendications précédentes, dans lequel le bras (5), la colonne (4), la base fixe (2) et les jambes de support (7) sont en métal, de préférence en aluminium.
